# FASCICULE DE BREVET EUROPEEN

(11) **EP 1 937 758 B1**
(45) Date de publication et mention de la délivrance du brevet: **23.12.2015**
(21) Numéro de dépôt: 06820175.5
(22) Date de dépôt: 10.10.2006
(51) Int. Cl.: C08J 7/12

(54) **PROCÉDÉ DE MODIFICATION DE SURFACES DE POLYMÈRES, NOTAMMENT D'HYDROXYLATION DE SURFACES DE POLYMÈRES, ET PRODUITS TELS QU'OBTENUS**
VERFAHREN ZUR MODIFIZIERUNG VON POLYMEROBERFLÄCHEN, WIE DIE HYDROXYLIERUNG VON POLYMEROBERFLÄCHEN, UND SO ERHALTENE PRODUKTE
METHOD FOR THE MODIFICATION OF POLYMER SURFACES, SUCH AS THE HYDROXYLATION OF POLYMER SURFACES, AND PRODUCTS THUS OBTAINED

(30) Priorité: 11.10.2005 FR 0510370
(43) Date de publication de la demande: 02.07.2008
(73) Titulaire: Alchimer S.A., 91300 Massy (FR); Alchimedics, 91300 Massy (FR)
(72) Inventeur: BUREAU, Christophe, F-91260 Juvisy-sur-Orge (FR); PINSON, Jean, F-94120 Fontenay-sous-Bois (FR)
(74) Mandataire: Grosset-Fournier, Chantal Catherine
(86) Numéro de dépôt international: PCT/FR2006/002269
(87) Numéro de publication internationale: WO 2007/042658

(56) Documents cités:
- EP-A2- 0 949 277
- WO-A-2004/043614
- GB-A- 1 414 671

## Description

La présente invention a pour objet un procédé de modification de surfaces de polymères, et notamment un procédé d'hydroxylation de surfaces de polymères, ainsi que les surfaces ainsi modifiées.

L'électrogreffage permet la fonctionnalisation de surfaces conductrices et semiconductrices de l'électricité. Un des avantages considérables de l'électrogreffage est que l'énergie qui permet à la fois la formation des liaisons d'interface et la croissance des films arrive "par la surface" : c'est donc la surface elle-même qui est génératrice de sa propre fonctionnalisation. Cette propriété a, par exemple, pour conséquence que les couches électrogreffées épousent avec grande précision la topologie des surfaces sur lesquelles elles ont été réalisées, et ce même à des échelles nanométriques. A l'échelle macroscopique, elle a également pour conséquence que l'électrogreffage délivre des revêtements sur des pièces ayant une forme de complexité arbitraire avec la même qualité partout : partout où la surface est mouillée par la solution d'électrogreffage, il y aura formation d'un film électrogreffé.

Il est évidemment impossible de réaliser l'électrogreffage sur des surfaces d'isolants, tout au moins sous sa forme habituelle, étant donné que l'activation directe d'un isolant par nature est impossible par voie électrique.

Dans le but de proposer des fonctionnalisations de qualité analogue sur tout type de surfaces, il est nécessaire de mettre au point des procédés de greffage sur isolants, en cherchant - soit dans les précurseurs moléculaires, soit dans les techniques d'activation des surfaces - des spécificités qui permettent de conserver les éléments essentiels constatés pour l'électrogreffage : liaison d'interface (covalente ou non), conformité, homogénéité...

Il est intéressant de fonctionnaliser la surface de polymères pour leur conférer des propriétés spécifiques d'hydrophilie, d'hydrophobie, d'adsorption ou de non adsorption de protéines ou d'autres molécules biologiques, de fixation de tout type de matériaux organiques ou inorganiques, de collage, plus généralement toute propriété désirable pour l'application souhaitée et pouvant se ramener à une modification des fonctions offertes par la surface de l'objet considéré. Ceci peut être réalisé directement ou par post-fonctionnalisation, après un traitement initial destiné à rendre la surface plus réactive.

La présente invention a pour but de fournir un procédé de préparation de surfaces modifiées à partir de surfaces de polymères, notamment par l'utilisation de radicaux OH• ou OR•.

La présente invention a également pour but de fournir des surfaces de polymères modifiées, notamment rendues hydrophiles, pouvant par la suite être utilisées dans le cadre de la mise en oeuvre de réactions ultérieures de fonctionnalisations.

La présente invention concerne l'utilisation de radicaux RO•, R représentant un atome d'hydrogène, un groupe alkyle comprenant de 2 à 15 atomes de carbone, un groupe acyle -COR' dans lequel R' représente un groupe alkyle comprenant de 2 à 15 atomes de carbone, ou un groupe aroyle -COAr dans lequel Ar représente un groupe aromatique comprenant de 6 à 15 atomes de carbone, pour l'hydroxylation, l'alcoxylation ou l'oxycarbonylation de surfaces de polymères ou de mélanges de polymères, notamment hydrophobes, lesdits polymères étant constitués de motifs monomériques dont au moins 50% parmi ceux-ci sont des motifs aromatiques et lesdits radicaux RO• étant générés par mise en oeuvre d'une réaction de Fenton par voie électrochimique ou photochimique.

La présente invention concerne également l'utilisation de radicaux hydroxyles HO•, pour l'hydroxylation de surfaces de polymères hydrophobes, lesdits polymères étant constitués de motifs monomériques dont au moins 50% parmi ceux-ci sont des motifs aromatiques.

L'expression "hydroxylation de surfaces" désigne la fixation de groupes hydroxyles (-OH) sur lesdites surfaces.

L'expression "alcoxylation de surfaces" désigne la fixation de groupes alcoxy (-OR) sur lesdites surfaces, R étant un groupe alkyle tel que défini ci-dessus.

L'expression "oxycarbonylation de surfaces" désigne la fixation de groupes oxycarbonyles (-OCOR' ou -OCOAr, R' et Ar étant tels que définis ci-dessus) sur lesdites surfaces.

L'expression "mélanges de polymères" désigne un matériau obtenu en mélangeant au moins deux polymères. Par exemple, le polymère Acrylonitrile-Butadiène-Styrène est obtenu en dispersant une phase élastomérique greffée (butadiène) dans une phase styrénique : copolymère styrène-acrylonitrile.

L'expression "motifs monomériques" désigne les motifs qui sont répétés dans le polymère.

L'expression "motifs aromatiques" désigne un motif contenant un noyau aromatique, c'est-à-dire un noyau contenant 4n+2 électrons délocalisés sur l'ensemble du cycle.

La présente invention concerne l'utilisation de la réaction de Fenton, pour l'hydroxylation, l'alcoxylation ou l'oxycarbonylation de surfaces de polymères ou de mélanges de polymères, lesdits polymères étant constitués de motifs monomériques dont au moins 50% parmi ceux-ci sont des motifs aromatiques, la réaction de Fenton étant mise en oeuvre par voie électrochimique ou par voie photochimique.

L'expression "réaction de Fenton" désigne la réaction qui permet de produire des radicaux hydroxyles par réaction de l'eau oxygénée avec du fer (II).

Cette réaction peut être représentée par le schéma réactionnel suivant :

Fe²⁺ + H₂O₂ + H⁺ → Fe³⁺ + H₂O + HO° k = 55 M⁻¹ s⁻¹

Elle est notamment décrite dans les articles suivants : Fenton, H., J., H. J. Chem. Soc. 1894, 65, 899 ; Haber, F.; Weiss, J. Proc.Roy. Soc. A. 1934, 134, 332 ; Barb.; W.G.; Baxendale, J., H.; George, P.; Hargrave, K. R. Nature 1949, 163, 692 ; Walling, C.; Weil, T. Int. J. Chem. Kinet. 1974, 6, 507 ; Gallard, H.; DeLaat, J.; Legube, B. Wat. Res. 1999, 33, 2929.

Cette réaction a été également appliquée, dans le cadre de la présente invention, en remplaçant l'eau oxygénée par un peroxyde ROOR, R étant tel que défini ci-dessus.

De nombreux polymères possédant des motifs aromatiques, en particulier le PEEK, sont utilisés dans des applications biomédicales. Pour de telles applications, les utilisateurs souhaitent conserver les propriétés mécaniques du polymère tout en rendant sa surface hydrophile. De plus, l'hydroxylation de la surface peut permettre par la suite d'effectuer des post-fonctionnalisations, c'est-à-dire accrocher de nouvelles fonctions avec des propriétés spécifiques sur la surface.

En ce qui concerne plus particulièrement l'hydroxylation du PEEK, elle est effectuée jusqu'à présent par réduction de la fonction cétone (Noiset, O.; Schneider, Y.-J.; Marchand-Brynaert, J. J. Biomat. Sci., Polymer Ed. 2000, 11, 767 ; Henneuse-Boxus, C.; De Ro, A.; Bertrand, P.; Marchand-Brynaert, J. Polymer 2000, 41, 2339; Henneuse-Boxus, C.; Poleunis, C.; De Ro, A.; Adriaensen, Y.; Bertrand, P.; Marchand-Brynaert, J. Surface and Interface Analysis 1999, 27, 142 ; Noiset, O.; Schneider, Y-J; Marchand-Brynaert, J. J. Pol. Sci., Part A: Polymer Chemistry 1997, 35, 3779), celle du PET par hydrolyse des fonctions esters (Mougenot, P.; Koch, M.; Dupont, I.; Schneider, Y.-J.; Marchand-Brynaert, J. J. Colloid and Interface Sci. 1996, 177, 162), par des plasmas (Cheng, T.-S.; Lin, H.-T.; Chuang, M.-J. Materials Letters 2004, 58, 650) (les auteurs ont réussi à rendre une face hydrophile et l'autre hydrophobe)

Il est particulièrement avantageux d'utiliser les réactions de Fenton, d'ElectroFenton et de PhotoFenton, car elles s'appliquent aux polymères indépendamment de leur structure chimique : elles sont donc non spécifiques des structures chimiques des polymères.

Selon un mode de réalisation avantageux, la présente invention concerne l'utilisation telle que définie ci-dessus, caractérisée en ce que la réaction de Fenton est mise en oeuvre par voie électrochimique, c'est-à-dire par la mise en oeuvre de la réaction d'ElectroFenton.

La réaction d'ElectroFenton (Tomat, R.; Vecchi, A. J. Appl. Electrochem. 1971, 1, 185; Oturan, M. A.; Pinson, J. New J. Chem 1992, 16, 705 ; Fang, X.; Pam, X.; Rahman, A. P. Chem.Eur. J.. 1995, 1, 423 ; Gallard, H.; DeLaat, J. Chemosphere 2001, 42, 405 ; Matsue.T., Fujihira, M.; Osa, T. J. Electrochem.Soc. 1981, 128, 2565 ; Fleszar, B.; Sobkoviak, A. Electrochim. Act. 1983, 28, 1315 ; Tzedakis, T.; Savall, A.;Clifton, M., J. J. Appl. Electrochem. 1989, 19, 911 ; Oturan, M. A.; Oturan, N.; Lahitte, C.; Trévin, S. J. Electranal. Chem. 2001, 507, 96; Brillas, E.; Casado, J. Chemosphere 2002, 47, 241) est une variante de la réaction de Fenton et consiste en une réaction catalytique où le Fe²⁺ est régénéré en continu à la cathode en même temps que l'oxygène est réduit pour former de l'eau oxygénée.
Alors que la réaction de Fenton par mélange de l'eau oxygénée et de Fe²⁺ conduit à une production par "bouffée" de radicaux hydroxyles (c'est-à-dire une production rapide de radicaux hydroxyles), la réaction d'ElectroFenton assure une production continue de ce radical tant que le potentiel permettant la réduction du Fe(II) en Fe(III) est maintenu. De plus, cette réaction est utilisée pour la dégradation complète en quelques heures d'effluents toxiques qui sont finalement transformés en CO₂ et H₂O.
Le cycle catalytique est décrit ci-dessous :

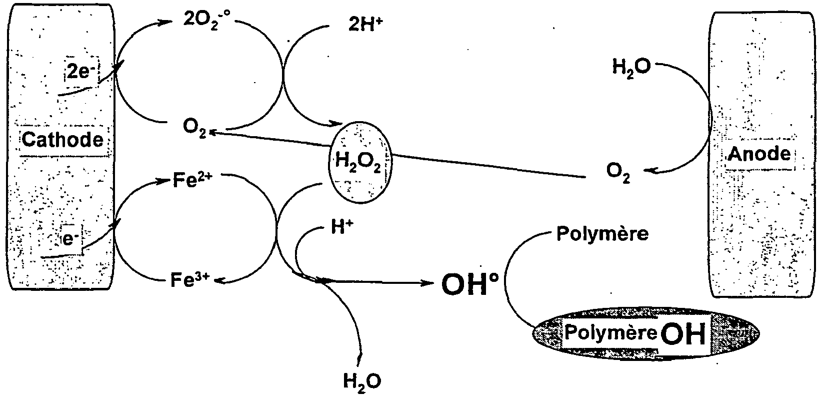

Selon un autre mode de réalisation avantageux, la présente invention concerne l'utilisation telle que définie ci-dessus, caractérisée en ce que la réaction de Fenton est mise en oeuvre par voie photochimique, c'est-à-dire par la mise en oeuvre de la réaction de PhotoFenton.

La réaction de PhotoFenton (Brillas, E.; Sauleda, R.; Casado, J. J. Electrochem. Soc. 1998, 145, 759) est une variante de la réaction de Fenton, correspondant au mécanisme suivant :

H₂O₂ + Fe²⁺ + H⁺ → Fe³⁺ + H₂O + HO°

Fe³⁺ + H₂O + hν → Fe²⁺ + HO° + H⁺

H₂O₂ + hν → 20H°

Comme la réaction d'ElectroFenton, cette réaction assure une production continue de radicaux hydroxyles tant qu'il y a de l'eau oxygénée.

La présente invention concerne également un procédé d'hydroxylation, d'alcoxylation ou d'oxycarbonylation d'une surface de polymères ou de mélanges de polymères, lesdits polymères étant constitués de motifs monomériques dont au moins 50% parmi ceux-ci sont des motifs aromatiques, pour obtenir une surface hydroxylée, alcoxylée ou oxycarbonylée, ledit procédé étant caractérisé en ce qu'il consiste à faire réagir ladite surface avec des radicaux RO•, R représentant un atome d'hydrogène, un groupe alkyle comprenant de 2 à 15 atomes de carbone, un groupe acyle -COR' dans lequel R' représente un groupe alkyle comprenant de 2 à 15 atomes de carbone, et notamment un groupe butyle ou lauryle, ou un groupe aroyle -COAr dans lequel Ar représente un groupe aromatique comprenant de 6 à 15 atomes de carbone, et notamment un groupe phényle, et lesdits radicaux RO• étant générés par mise en oeuvre d'une réaction de Fenton par voie électrochimique ou photochimique.

L'expression "surface hydroxylée" désigne une surface comportant des groupes hydroxyles (-OH).

L'expression "surface alcoxylée" désigne une surface comportant des groupes alcoxy (-OR), R représentant un groupe alkyle tel que défini ci-dessus.

L'expression "surface oxycarbonylée" désigne une surface comportant des groupes oxycarbonyles (-OCOR' ou -OCOAr, R' et Ar étant tels que définis ci-dessus). Selon un mode de réalisation particulier, les surfaces oxycarbonylées obtenues selon le procédé de l'invention comportent des groupes -COR' ou -COAr, R' et Ar étant tels que définis ci-dessus.

Les radicaux RO• sont obtenus par coupure du peroxyde RO-OR catalysée par le Fer (II).

Les radicaux HO• sont formés par coupure de l'eau oxygénée H₂O₂ catalysée par le Fer (II).

Un procédé d'hydroxylation préféré selon l'invention est caractérisé en ce qu'il consiste à faire réagir la surface avec des radicaux hydroxyles HO•.

La présente invention concerne également un procédé d'hydroxylation d'une surface de polymères, notamment hydrophobes, lesdits polymères étant constitués de motifs monomériques dont au moins 50% parmi ceux-ci sont des motifs aromatiques, notamment choisis parmi les groupes aromatiques suivants : phényle, anthryle, naphtyle, biphényle, phénanthryle, pyrényle, pyridyle, pyrimidyle, pyrazinyle, pyridazinyle, quinoxalyle, quinazolyle, quinolinyle, thiophényle, pyrrolyle, phénathrolinyle, phénanthridinyle, indolyle et carbazolyle, pour obtenir une surface hydroxylée, ledit procédé étant caractérisé en ce qu'il consiste à faire réagir ladite surface avec des radicaux hydroxyles HO• obtenus par la mise en oeuvre de la réaction de Fenton, par voie électrochimique ou photochimique (réaction d'ElectroFenton ou réaction de PhotoFenton).

Les motifs monomériques sont donc choisis parmi les motifs de formules suivantes :

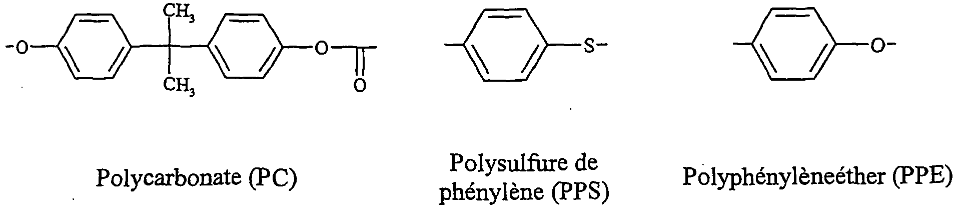

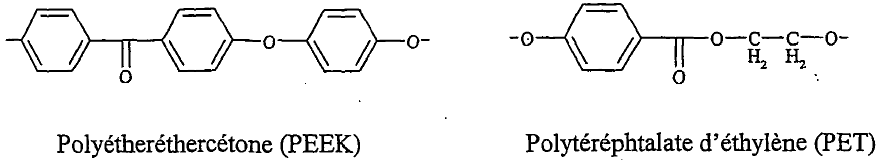

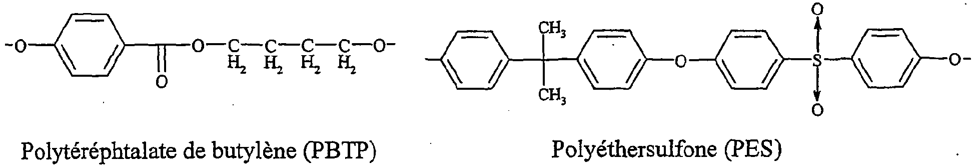

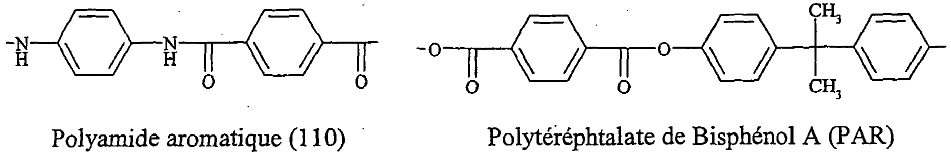

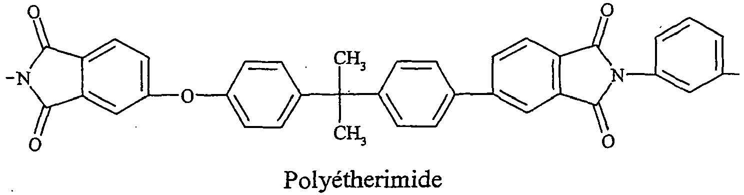

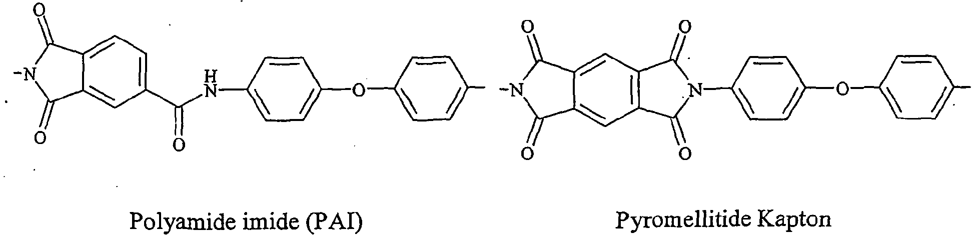

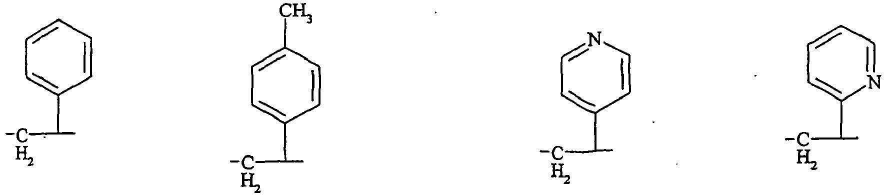

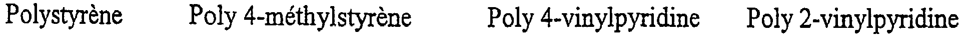

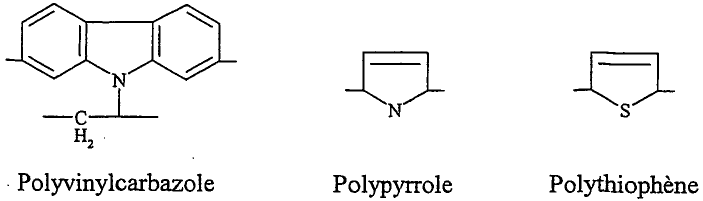

De préférence, les polymères impliqués dans l'invention sont différents des polymères de polysiloxanes.

La présente invention concerne le procédé tel que défini ci-dessus, caractérisé en ce que les radicaux hydroxyles HO• sont obtenus par la mise en présence d'eau oxygénée et d'ions ferriques (Fe³⁺) ou ferreux (Fe²⁺).

Le procédé de l'invention est caractérisé en ce que les radicaux hydroxyles HO• sont obtenus par la mise en oeuvre de la réaction d'ElectroFenton.

Selon un mode de réalisation avantageux, le procédé de l'invention, comprenant la mise en oeuvre de la réaction d'ElectroFenton, est caractérisé en ce que l'eau oxygénée est obtenue directement par la réduction électrochimique d'oxygène en milieu acide, et en ce que les radicaux hydroxyles HO• proviennent de la réaction des ions ferreux avec l'eau oxygénée.

L'expression "réduction électrochimique d'oxygène" désigne le transfert de deux électrons et de deux protons au dioxygène pour produire l'eau oxygénée.

L'expression "milieu acide" désigne un milieu dont le pH est inférieur à 7 et plus particulièrement est compris de 2 à 4, et de manière plus précise égal à 3.

La présente invention concerne également un procédé tel que défini ci-dessus, caractérisé en ce que les radicaux hydroxyles HO• sont obtenus par la mise en oeuvre de la réaction de PhotoFenton.

Selon un mode de réalisation avantageux, dans le cadre de la mise en oeuvre de la réaction de PhotoFenton, le procédé de l'invention est caractérisé en ce que l'eau oxygénée est ajoutée à la surface des polymères, et en ce que les radicaux hydroxyles HO• sont obtenus par la mise en présence de ladite surface avec une solution aqueuse comprenant l'eau oxygénée et un sel ferreux, notamment du chlorure ou du sulfate ferreux, et par l'irradiation de ladite surface et de ladite solution.

L'expression "la mise en présence de ladite surface avec une solution aqueuse" désigne l'immersion de la surface dans la solution, ou bien le dépôt d'un volume, par exemple d'une goutte, de ladite solution sur ladite surface.

L'expression "irradiation de ladite surface et de ladite solution" désigne le fait d'éclairer la solution et la ou les surfaces avec une lampe émettant dans les longueurs d'onde convenables, particulièrement dans l'ultraviolet, c'est-à-dire à des longueur d'ondes inférieures à 400 nm.

Selon un autre mode de réalisation avantageux, la présente invention concerne le procédé tel que défini ci-dessus, caractérisé en ce que les polymères sont immergés dans une solution aqueuse comprenant l'eau oxygénée et un sel ferreux, notamment du chlorure ou du sulfate ferreux, et en ce que ladite solution et les polymères sont irradiés par lampe UV.

La présente invention concerne également un procédé tel que défini ci-dessus, caractérisé en ce que les polymères comprennent des motifs monomériques présentant une masse moléculaire variant d'environ 500 à environ 5 millions de daltons.

Une masse moléculaire de 500 daltons correspond à la limite basse des masses moléculaires des polymères et une masse moléculaire de 5 millions de daltons correspond à l'ordre de grandeur du polyéthylène UHMW (UltraHigh Molecular Weight).

La présente invention concerne également un procédé tel que défini ci-dessus, caractérisé en ce que les polymères sont choisis parmi : le polycarbonate (PC), le polysulfure de phénylène (PPS), le polyphénylène éther (PPE), le polyétheréther cétone (PEEK), le polytéréphtalate d'éthyle (PET), le polyéther sulfone (PES), le polyamide aromatique (PPA), le polytéréphtalate de bisphénol (PAR), le polyétherimide (PEI), le polyamide-imide (PAI, Torlon^{®}), le polypyrromellitide (Kapton^{®}, styrène), le poly(4-méthylstyrène), le poly(4-vinylpyridine) (4VP) ou le poly(2-vinylpyridine) (2VP) et le polyvinylcarbazole.

Les formules de ces différents polymères sont indiquées ci-après :

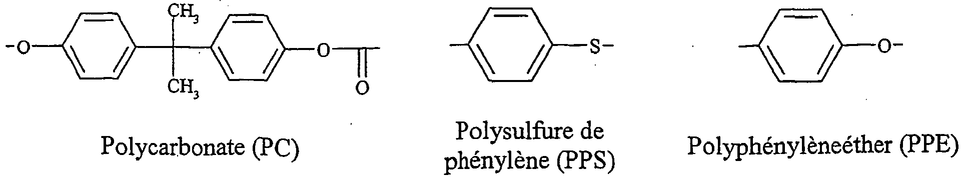

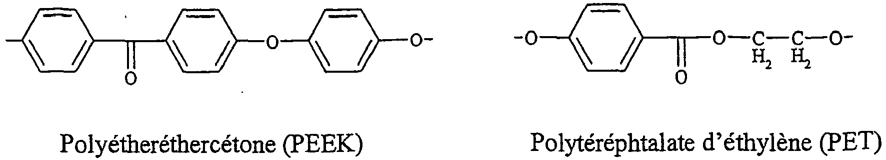

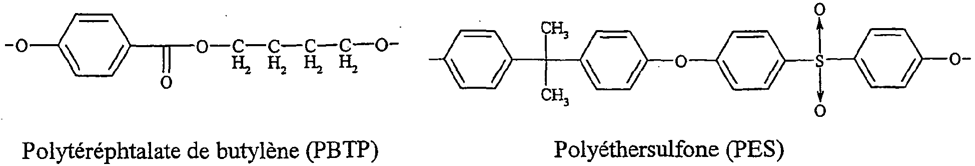

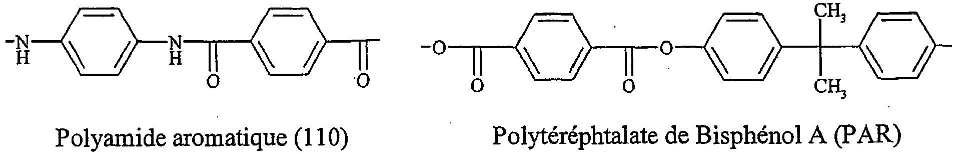

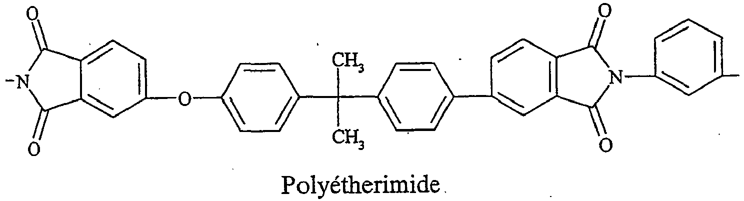

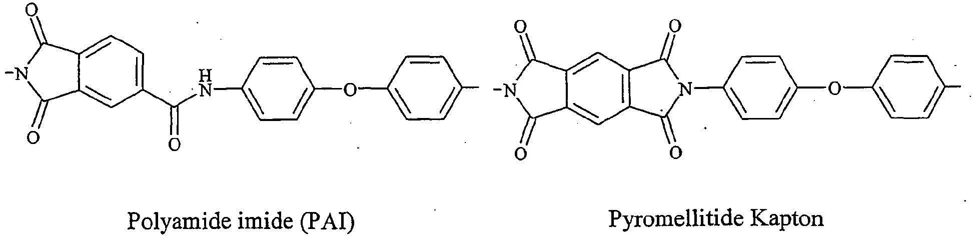

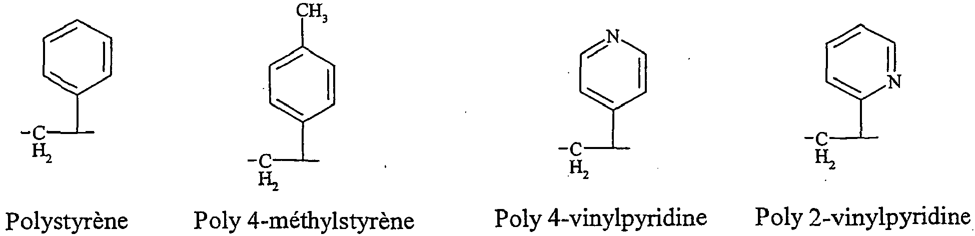

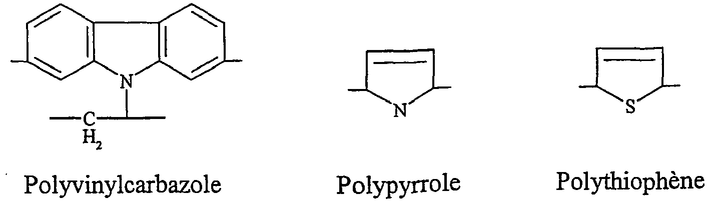

La présente invention concerne également un procédé tel que défini ci-dessus, caractérisé en ce que les polymères sont constitués de motifs monomériques comprenant au moins un motif aromatique, notamment un groupe aryle pendant, et au moins un motif de type alcane, lesdits polymères étant choisis parmi : les copolymères statistiques, les copolymères alternés et les copolymères à blocs (diblocs, triblocs, multiblocs ou radiaux).

Les copolymères alternés sont des polymères de la forme : -ABABABAB-.

Les copolymères blocs ou séquencés sont des polymères de la forme :
-AAAAAABBBBBBAAAAAABBBBBBB- ou
-AAAAAABBBBBBCCCCCCAAAAAABBBBBB-

Les copolymères statistiques sont des polymères de la forme :
-AABABBAAABABB-

Les copolymères biséquencés sont des polymères de la forme : -(A)ₙ-(B)ₜ-

Les copolymères triséquencés sont des polymères de la forme : -(A)ₘ-(B)ₙ-(A)ₜ-

Les copolymères en étoile (ou radiaux) sont des polymères de la forme :

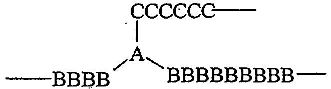

A, B et C représentant des motifs monomériques tels que définis ci-dessus.

La présente invention concerne également un procédé tel que défini ci-dessus, caractérisé en ce que la surface de polymères est sous la formé d'une feuille, d'une plaque, d'un tricot, d'un tube, par exemple un cathéter, de fils, de clous ou vis, de billes, d'objets de formes diverses pouvant servir de prothèses ou de lentilles extra ou intraoculaires.

Selon un mode de réalisation préféré, le procédé de l'invention est caractérisé en ce qu'il ne comprend pas d'étape de réticulation.

La présente invention concerne également un procédé tel que défini ci-dessus, caractérisé en ce que l'étape consistant à faire réagir la surface avec les radicaux hydroxyles HO• est effectuée pendant environ 5 minutes à environ 5 heures.

La présente invention concerne également un procédé tel que défini ci-dessus, caractérisé en ce qu'il comprend une étape ultérieure de fonctionnalisation sur les groupes hydroxyles fixés sur la surface hydroxylée.

Parmi les réactions ultérieures de fonctionnalisation, on peut citer : la formation d'esters par réaction avec un acide carboxylique, d'éthers par réaction de Williamson avec un autre alcool, d'halogénures par réaction avec des acides halogénés ou PCl₅, de N-alkylamides par la réaction de Mitsunobu ou de sulfures par réaction de thiols.

De manière générale, la post-fonctionnalisation permet à l'homme de l'art de placer sur la surface la fonction organique souhaitée pour l'application visée, par exemple dans le domaine biomédical, l'adhésion ou la non-adhésion des protéines, l'accrochage de médicaments, d'antimicrobiens...

Les réactions de fonctionnalisation ultérieures permettent de conférer des propriétés spécifiques à la surface : par exemple en accrochant des molécules à activité biologique (par exemple des enzymes) ou à propriétés pharmaceutiques. Ceci peut être réalisé en liant le groupe OH sur la surface soit directement à la molécule souhaitée soit par l'intermédiaire d'un bras intermédiaire. On peut lier les fonctions alcools par formation d'ester (par réaction avec un anhydride, un chlorure d'acide ou même d'un acide), d'amides (par réaction avec des isocyanates) ou d'éthers (par réaction avec des halogénures d'alkyle).

La présente invention concerne également un procédé d'hydroxylation tel que défini ci-dessus, caractérisé en ce que l'angle de contact mesuré entre une goutte d'eau et la surface hydroxylée obtenue diminue de plus de 5°, notamment de plus de 10° par rapport à l'angle de contact mesuré entre une goutte d'eau et la surface non hydroxylée.

L'angle de contact est mesuré en déposant une goutte d'eau sur la surface du polymère avec une seringue, puis en mesurant à l'aide d'un microscope l'angle formé entre la surface du polymère et la tangente à la goutte à son point de contact avec le polymère.
Plus la surface est hydrophile, plus l'angle de contact mesuré est petit, et plus la surface est hydrophobe, plus l'angle de contact mesuré est grand.

La présente invention concerne également un procédé tel que défini ci-dessus, caractérisé en ce que les surfaces hydroxylées, alcoxylées ou oxycarbonylées obtenues sont stables dans le temps, notamment pendant plusieurs semaines, selon le test suivant :

Les spectres infrarouge des échantillons de PET et de PEEK, modifiés par réaction d'électroFenton soit pendant 10 minutes, soit pendant 120 minutes, puis trifluoroacétylés, sont réenregistrés après 74 jours. En enregistrant la différence des spectres (à t=0 et t=74 jours), on ne note pas de différence significative et en particulier pas de disparition des bandes caractéristiques des groupes trifluoroacétyles.

La présente invention concerne également des surfaces hydroxylées, alcoxylées ou oxycarbonylées obtenues par la mise en oeuvre du procédé de l'invention tel que défini ci-dessus.

Comme le montre la mesure des angles de contacts rapportés dans la partie expérimentale ci-après, les surfaces traitées sont bien devenues hydrophiles (dans le cas de l'hydroxylation) et seront par conséquent beaucoup plus biocompatibles.

La liaison entre le polymère et le groupe OH est une liaison covalente dont l'énergie est de l'ordre de 390 (CH₃OH) à 470 kJ/mol (C₆H₅OH).

### I - RÉACTION D'ELECTRO-FENTON

### Hydroxylation du Polyéthyltéréphtalate (PET) du Polyétheréthercétone (PEEK) et de l'Acrylonitrile-Butadiène-Styrène (ABS)

### Substrats

- PET tricot et
   feuille ES 304045
- PEEK (feuille Goodfellow EK 113000)
- ABS plaque (Goodfellow, AB3030090) [obtenue en dispersant une phase élastomérique greffée (butadiène) dans une phase styrénique (SAN) obtenue par copolymérisation d'acrylonitrile avec le styrène]

### Dispositif électrochimique :

Cellule à compartiments non séparés.
Anode : carbone.
Cathode : feutre de carbone (environ 10 cm²).
La feuille ou le tricot de polymère sont serrés contre une feuille ou placés entre deux feuilles de feutre de carbone servant de cathode.
Solvant H₂SO₄ 0,1M amené à pH 3 avec de la soude
Catalyseur Fe²⁺ 0,5 mM (FeSO₄, 7H₂O)
Bullage continu d'air
*Méthode Galvanostatique :* Courant constant : 10 mA ou 5 mA selon les expériences
*Méthode Potentiostatique :* Potentiel constant E = -0,6V/SCE

### A) Hydroxylation du PET

### Hydroxylation d'une feuille

a) En galvanostatique i = 5 mA, 2 heures :
   La contre électrode est court-circuitée sur la référence.
   Le potentiel de la cathode augmente d'environ -0,6V/SCE au début de l'expérience à environ -2V/SCE en fin d'électrolyse, à ce potentiel on doit réduire les protons et donc réduire l'efficacité de la réduction de l'oxygène.
   Les échantillons sont soigneusement rincés à l'eau distillée 10 minutes sous ultrasons, puis 10 minutes dans l'acétonitrile (pour analyse) et séchés à 40°C sous vide pendant une nuit.
b) En potentiostatique le courant diminue d'environ 30 à environ 10 mA. Les échantillons sont traités comme ci-dessus.

Pour l'analyse IR les échantillons sont traités une nuit dans une solution d'anhydride trifluoroacétique (1 mL) dans l'éther (30 mL), rincés à l'acétonitrile puis séchés sous vide une nuit. Les résultats sont rassemblés dans le Tableau 1.

**Tableau 1. Analyse IR d'une feuille de PET hydroxylée puis trifluoroacétylée***

| Position des bandes en cm⁻¹ | Attribution | Par comparaison |
|---|---|---|
| 1794 | C=O | La bande C=O du PET lui-même est située à 1714 cm⁻¹ |
| | | ≈ 1813 cm⁻¹ pour (CF₃CO)₂O |
| | | ≈ 1780 cm⁻¹ pour CF₃COOH |
| 1131, 1270 | CF₃ | ≈ 1160, 1240 cm⁻¹ pour (CF₃CO)₂O |

| | | |
|---|---|---|
| Référence : feuille de PET non traitée. | | |

On ne note pas de différence significative entre les expériences en galvanostatique ou en potentiostatique.

L'angle de contact d'une goutte d'eau diminue d'environ 90, il est peut différent immédiatement après dépôt de la goutte mais il diminue ensuite pour atteindre 55° après environ 5 minutes.

L'analyse ToF-SIMS confirme bien la trifluorométhylation de la surface

-OH + CF₃(C=O)O(O=C)CF₃ → -O(C=O)CF₃

comme le montrent les fragments décrits dans le Tableau 2.

**Tableau 2 Analyse ToF-SIMS d'une feuille de PET hydroxylée puis trifluoroacétylée**

| m/z | Attribution |
|---|---|
| 19 | F |
| 69 | CF3⁻ et CF3⁺ |
| 85 | OCF3⁻ |
| 95 | CH=CHCF₃⁻ |
| 97 | OC(=O)CF3⁻ |
| 105 | C₆H₅C(=O) |
| 213 | {C(=O)OCH₂CH(OC(=O)CF₃) C(=O)H}⁻ ou isomère |

### Hydroxylation d'un tricot

### Electrolyse 1 heure. Méthode galvanostatique : i = 10mA

Analyse IR : par différence avec un échantillon non traité on observe une bande à 3380 cm⁻¹ pouvant être attribuée à une vibration d'élongation OH.

Angle de contact : sur un tricot, il est d'environ 90°C sur un échantillon non traité alors que sur un échantillon traité comme ci-dessus la goutte d'eau traverse le tissu en s'étalant complètement.

L'analyse ToF-SIMS de la surface hydroxylée présente un pic à m/z = 138 qu'on peut attribuer à l'ion [O-(C=O)C₆H₄OH]⁻ (la même espèce protonée est visible dans les ions positifs), qui correspond à un fragment du polymère hydroxylé.

### B) Hydroxylation du PEEK

### Feuille Goodfellow

Traité dans les mêmes conditions que ci-dessus en galvanostatique et en potentiostatique.

L'analyse ToF-SIMS, montre, par rapport à la référence non traitée, un pic (en ions négatifs) à m/z= 231 auquel on peut attribuer la formule HOC₆H₄C(=O)C₆H₃(OH)₂; des pics à m/z = 97, 79 (97-H₂O) et 63 (79-O).

Après trifluoroacétylation, les deux échantillons sont analysés par IR.

**Tableau 3. Analyse IR d'une feuille de PEEK hydroxylée puis trifluoroacétylée***

| Position des bandes en cm⁻¹ | Attribution | Par comparaison |
|---|---|---|
| 1788 | C(=O)CF₃ | La bande C=O du PEEK lui-même est située à 1653 cm⁻¹ (motif benzophénone) |
| 1217, 1186 | CF₃ | ≈ 1160, 1240 cm⁻¹ pour (CF₃CO)₂O |

| | | |
|---|---|---|
| Référence : feuille de PEEK non traitée. | | |

**Tableau 4. Analyse ToF-SIMS d'une feuille de PEEK Goodfellow.**

| m/z | Attribution |
|---|---|
| 19 | F⁻ |
| 69 | CF₃⁻ |
| 113 | OC(=O)CF₃⁻ |
| 265 | C₆H₄C(=O)C₆H₄(CF₃)O⁻ |
| 293 | C₆H₄C(=O)C₆H₄[OC(=O)CF₃]⁻ |
| 323 | C₆H₄C(=O)C₆H₄[OC(=O)CF₃]O⁻ |
| 197 | C₆H₅C(=O)C₆H₄O⁺ |
| 212 | OC₆H₄C(=O)C₆H₄O⁺ |
| 289 | OC₆H₄C(=O)C₆H₄OC₆H₄O⁺ |

On ne note pas de différence significative entre les expériences en galvanostatique ou en potentiostatique.

L'angle de contact d'une goutte d'eau sur le PEEK est de 87°, il diminue à 65° après traitement par la réaction d'ElectroFenton en potentiostatique.

### C) Hydroxylation de ABS

Traité dans les mêmes conditions que ci-dessus en galvanostatique et en potentiostatique.

Le spectre IR de la surface hydroxylée a été enregistré.

**Tableau 5. Spectre IR de ABS après traitement.**

| Position des bandes en cm⁻¹ | Attribution |
|---|---|
| 3240 | O-H |
| 1050 | C-O alcool primaire |

| | |
|---|---|
| *après soustraction d'une référence non traitée, échantillons séchés sous vide à 40°C pendant deux jours pour s'assurer que les bandes OH ne proviennent pas de l'humidité résiduelle. | |

L'échantillon est trifluoroacétylé comme ci-dessus. Pour obtenir une référence, on fait subir le traitement de trifluoroacétylation à un échantillon n'ayant pas été hydroxylé.

**Tableau 6. Analyse IR d'une feuille de ABS hydroxylée puis trifluoroacétylée***

| Position des bandes en cm⁻¹ | Attribution | Par comparaison |
|---|---|---|
| 1765 | C=O | ≈ 1813 cm⁻¹ pour (CF₃CO)₂O |
| | | ≈ 1780 cm⁻¹ pour CF₃COOH |
| 1245 épaulement | CF3 | ≈ 1160, 1240 cm⁻¹ pour (CF₃CO)₂O |
| 1160 épaulement | | ≈ 1190, 1240 cm⁻¹ pour CF₃COOH |

| | | |
|---|---|---|
| Référence : feuille de ABS non hydroxylée et ayant subit le traitement de trifluoroacétylation. | | |

**Tableau 7. Analyse ToF-SIMS d'une feuille de ABS hydroxylée puis trifluoroacétylée***

| m/z | Attribution |
|---|---|
| 19 | F |
| 69 | CF3- |
| 97 | C(=O)CF3⁻ |
| 145 | OC(=O)CF3⁻ |
| 228 | NC-(CH₂)₅-OC(=O)CF₃⁺ |

L'angle de contact d'une goutte d'eau sur l'ABS est de 69°, il diminue à 37° après traitement par la réaction d'ElectroFenton en potentiostatique.

### Influence du temps de réaction sur la greffage de polymères

Des "enveloppes" de feutre de carbone contenant chacune un échantillon de PET ou de PEEK ont été introduites dans la solution d'ElectroFenton. La réaction d'ElectroFenton a été conduite en mode potentiostatique comme décrit ci-dessus. Les enveloppes ont été retirées de la solution après 10, 30, 60, 90, 120 minutes ; les échantillons de polymères ont été rincés à la pissette d'eau distillée, deux fois 15 minutes à l'eau distillée, une fois 15 minutes à l'acétonitrile pour analyse sous ultrasons et séchés sous vide à 40°C pendant deux jours (en même temps que les références). Les spectres IR ont été enregistrés et analysés après sous traction de la référence.

### PET

L'analyse de la bande à 1714 cm⁻¹ (très faible) du PET lui-même montre que celle-ci devient pratiquement nulle dès 30 minutes alors que la bande à 1131 cm⁻¹ (forte) devient nulle à partir de 60 minutes de réaction.

### PEEK.

A la différence des polymères ci-dessus, on ne note pas de variation significative des bandes CF₃ à 1217 et 1186 cm⁻¹ (la bande C=O vers 1788 cm⁻¹ est trop faible pour pouvoir être analysée).
Il semble donc que la réaction d'hydroxylation du PET passe par un maximum vers 10 à 30 minutes alors que l'hydroxylation du PEEK reste constante après 10 minutes de réaction. Un temps de réaction de 10 minutes est donc suffisant pour atteindre le taux d'hydroxylation maximum et poursuivre la réaction au delà de ce temps conduit à la dégradation du PET.

### Stabilité du greffage dans le temps

Après 74 jours, les spectres infrarouge des échantillons de PET et PEEK modifiés par réaction d'électroFenton soit pendant 10 minutes, soit pendant 120 minutes puis trifluoroacétylés ont été réenregistrés. En enregistrant la différence des spectres (à t=0 et t=74 jours), on ne note pas de différence significative et en particulier pas de disparition des bandes caractéristiques des groupes trifluoroacétyles.

### II - RÉACTION DE PHOTO-FENTON

### Hydroxylation du Polyéthyltéréphtalate (PET) et du Polyétheréthercétone (PEEK)

| | |
|---|---|
| Substrats | PET et feuille (DSM) |
| | PEEK (feuille Goodfellow) |

### Exemple 1

Un réacteur en verre de 2L muni d'une pompe de circulation, d'une double enveloppe de thermostatation et d'une lampe mercure basse pression placée au centre du réacteur dans un tube en quartz est rempli de 2 L de solution HCl 1 mM dans l'eau, de 1 g de chlorure ferrique et de 2 mL d'eau oxygénée. Les échantillons de polymères sont suspendus dans la solution. On met en marche la pompe et l'irradiation ; après 2h 30, on arrête l'irradiation. Les échantillons sont rincés 15 minutes dans l'eau distillée sous ultrasons, puis à l'acétone et séchés sous vide à 40°C pendant une nuit.

La mesure des angles de contact de l'eau a été effectuée avant et après traitement

**Tableau 8. Angles de contact d'échantillons de polymères traités par PhotoFenton.**

| Echantillon | Angle de contact avant traitement | Angle de contact après traitement |
|---|---|---|
| PET | 90 | 88^{a)} 62 (après 5') |
| PEEK | 87 | 60 |

| | | |
|---|---|---|
| a) immédiatement après dépôt de la goutte. b) sans diminution notable de la taille de la goutte. | | |

Les échantillons sont ensuite traités à l'anhydride trifluoroacétique (0,4 mL dans 10 mL d'éther) et analysés par IR. Sur les trois échantillons on observe bien les bandes vers 1206-1254 cm⁻¹ et 1165-1185 cm⁻¹ qui sont attribuées aux vibrations du groupe CF₃ par comparaison avec les spectres de l'acide et de l'anhydride trifluoroacétique. La vibration correspondant au groupement carbonyle (C=O)CF₃ est observable sur PEEK. Ces spectres confirment bien la modification de la surface des polymères.

**Tableau 9. Spectres IR des échantillons trifluoroacétylés.**

| Echantillon | Absorption IR en cm⁻¹ | Attribution |
|---|---|---|
| PET | 1254 s | CF₃ (1248 pour CF3CO)₂O et 1240 pour CF₃COOH) |
| | 1165 m | |
| | | |
| | | CF₃ (1195 pour CF3CO)₂O et 1177 pour CF₃COOH) |
| PEEK^{a} | ≈ 1800 vw | C=O (≈ 1790 cm⁻¹ pour CF₃COOH) |
| | | |
| | 1215 m | CF₃ (1248 pour CF3CO)₂O et 1240 pour CF₃COOH) |
| | 1185 m | |
| | | |
| | | CF₃ (1195 pour CF3CO)₂O et 1177 pour CF₃COOH) |

| | | |
|---|---|---|
| a) après soustraction du spectre du polymère lui-même, | | |

**Tableau 10. Spectres ToF-SIMS des échantillons trifluoroacétylés.**

| Echantillon | m/z | Attribution |
|---|---|---|
| PET | 19 | F⁻ |
| | 69 | CF₃⁻, CF₃⁺ |
| | 85 | OCF₃⁻ |
| | 97 | COCF3⁻ |
| PEEK^{a} | 19 | F⁻ |
| | 69 | CF₃⁻, CF₃⁺ |
| | 85 | OCF₃⁻ |
| | 97 | COCF₃⁻ |
| | 113 | [O(C=O)CF₃]⁻ |
| | 370 | [C₆H₄(C=O)C₆H₃(OCF₃)OC₆H₄O-2H]⁺ |

Les variations de l'angle de contact, les spectres IR et les spectres ToF-SIMS confirment bien le greffage des polymères par des groupes OCF₃ après traitement à l'anhydride acétique, donc l'hydroxylation des surfaces.

### Réaction analogue à la réaction de Fenton, utilisant le peroxyde de lauroyle

Les échantillons de PET sont préparés comme ci-dessus et placés dans 360 mL d'une solution d'H₂SO₄ 0,1N amenée à pH 3 par addition de soude à laquelle on ajoute 400 mg de peroxyde de lauroyle (CH₃(CH₂)₁₀C(=O)OOC(=O)(CH₂)₁₀CH₃)(solution saturée) et 55 mg de FeSO₄, 5H₂O (0,5 mM). Les échantillons enveloppés dans du feutre de carbone sont utilisés comme cathode, le potentiel est fixé à -0,6 V/SCE pendant deux heures, ensuite ils sont lavés à l'eau du robinet, deux fois à l'eau distillée sous ultrasons pendant 10 minutes, puis une fois à l'acétone sous ultrasons pendant 10 minutes et finalement séchés sous vide. Pour augmenter la solubilité du peroxyde de lauroyle, on ajoute 50% d'acétonitrile dans la solution sans changement notable des résultats (hormis l'intensité relative des pics en ToF-SIMS). Les échantillons de PET ont été analysés par ToF-SIMS et on constate que le PET présente une surface modifiée.

**Tableau 11. Analyse ToF-SIMS d'échantillons de PET traités par le peroxyde de lauroyle dans les conditions de la réaction de Fenton.**

| m/z | Attribution |
|---|---|
| PET | |
| 155 | CH₃(CH₂)₁₀⁻ |
| 185 | CH₃(CH₂)₁₀C(=O)H⁻ |
| 213 | CH₃(CH₂)₁₀ +CH₂OC(=O) |
| 223 | CH₂OC(=O)C₆H₅C(=O)O(CH₂)₂OH |

### Conclusion

Plusieurs exemples de l'hydroxylation de la surface de polymères par la réaction de Fenton soit par photochimie soit par électrochimie ont été décrits. La réaction s'est montrée efficace, en particulier sur des polymères peu réactifs tels que le PEEK. Cette réaction n'est pas spécifique des fonctions du polymère et est donc susceptible de s'appliquer à n'importe quel polymère.
Il a aussi été mis en évidence la réaction du peroxyde de lauroyle sur le PET dans les conditions de la réaction de Fenton.

## Revendications

1. Utilisation de radicaux RO•, ou R représentant un atome d'hydrogène, un groupe alkyle comprenant de 2 à 15 atomes de carbone, un groupe acyle -COR' dans lequel R' représente un groupe alkyle comprenant de 2 à 15 atomes de carbone, ou un groupe aroyle -COAr dans lequel Ar représente un groupe aromatique comprenant de 6 à 15 atomes de carbone, pour l'hydroxylation, l'alcoxylation ou l'oxycarbonylation de surfaces de polymères ou de mélanges de polymères, lesdits polymères étant constitués de motifs monomériques dont au moins 50% parmi ceux-ci sont des motifs aromatiques, et lesdits radicaux RO• étant générés par mise en oeuvre d'une réaction de Fenton, par voie électrochimique ou photochimique.

2. Utilisation de la réaction de Fenton, pour l'hydroxylation, l'alcoxylation ou l'oxycarbonylation de surfaces de polymères ou de mélanges de polymères, lesdits polymères étant constitués de motifs monomériques dont au moins 50% parmi ceux-ci sont des motifs aromatiques, la réaction de Fenton étant mise en oeuvre par voie électrochimique ou par voie photochimique.

3. Procédé d'hydroxylation, d'alcoxylation ou d'oxycarbonylation d'une surface de polymères ou de mélanges de polymères, lesdits polymères étant constitués de motifs monomériques dont au moins 50% parmi ceux-ci sont des motifs aromatiques, pour obtenir une surface hydroxylée, alcoxylée ou oxycarbonylée, ledit procédé étant **caractérisé en ce qu'**il consiste à faire réagir ladite surface avec des radicaux RO•, R représentant un atome d'hydrogène, un groupe alkyle comprenant de 2 à 15 atomes de carbone, un groupe acyle -COR' dans lequel R' représente un groupe alkyle comprenant de 2 à 15 atomes de carbone, et notamment un groupe butyle ou lauryle, ou un groupe aroyle -COAr dans lequel Ar représente un groupe aromatique comprenant de 6 à 15 atomes de carbone, et notamment un groupe phényle et lesdits radicaux RO• étant générés par mise en oeuvre d'une réaction de Fenton, par voie électrochimique ou photochimique.

4. Procédé d'hydroxylation selon la revendication 3, **caractérisé en ce qu'**il consiste à faire réagir la surface avec des radicaux hydroxyles HO•.

5. Procédé d'hydroxylation d'une surface de polymères, lesdits polymères étant constitués de motifs monomériques dont au moins 50% parmi ceux-ci sont des motifs aromatiques, notamment choisis parmi les groupes aromatiques suivants : phényle, anthryle, naphtyle, biphényle, phénanthryle, pyrényle, pyridyle, pyrimidyle, pyrazinyle, pyridazinyle, quinoxalyle, quinazolyle, quinolinyle, thiophényle, pyrrolyle, phénathrolinyle, phénanthridinyle, indolyle et carbazolyle, lesdits polymères étant notamment choisis parmi : le polycarbonate (PC), le polysulfure de phénylène (PPS), le polyphénylène éther (PPE), le polyétheréther cétone (PEEK), le polytéréphtalate d'éthyle (PET), le polyéther sulfone (PES), le polyamide aromatique (PPA), le polytéréphtalate de bisphénol (PAR), le polyétherimide (PEI), le polyamide-imide (PAI, Torlon^{®}), le polypyrromellitide (Kapton^{®}, styrène), le poly(4-méthylstyrène), le poly(4-vinylpyridine) (4VP) ou le poly(2-vinylpyridine) (2VP) et le polyvinylcarbazole,
pour obtenir une surface hydroxylée, ledit procédé étant **caractérisé en ce qu'**il consiste à faire réagir ladite surface avec des radicaux hydroxyles HO• obtenus par la mise en oeuvre de la réaction de Fenton, par voie électrochimique ou photochimique (réaction d'ElectroFenton ou réaction de PhotoFenton).

6. Procédé selon la revendication 5, **caractérisé en ce que** les radicaux hydroxyles HO• sont obtenus par la mise en présence d'eau oxygénée et d'ions ferriques (Fe³⁺) ou ferreux (Fe²⁺).

7. Procédé selon l'une quelconque des revendications 3 à 6, **caractérisé en ce que** les polymères comprennent des motifs monomériques présentant une masse moléculaire variant d'environ 500 à environ 5 millions de daltons.

8. Procédé selon l'une quelconque des revendications 3 à 7, **caractérisé en ce que** la surface de polymères est sous la forme d'une feuille, d'un tricot, d'un tube, par exemple un cathéter, de fils, de clous ou vis, de billes, d'objets de formes diverses pouvant servir de prothèses ou de lentilles extra ou intraoculaires.

9. Procédé selon l'une quelconque des revendications 5 à 8, **caractérisé en ce que** l'étape consistant à faire réagir la surface avec les radicaux hydroxyles HO• est effectuée pendant environ 5 minutes à environ 5 heures.

10. Procédé selon l'une quelconque des revendications 5 à 9, **caractérisé en ce qu'**il comprend une étape ultérieure de fonctionnalisation sur les groupes hydroxyles fixés sur la surface hydroxylée.

## Patentansprüche

1. Verwendung von Radikalen RO●, wobei R für ein Wasserstoffatom, eine Alkylgruppe, die 2 bis 15 Kohlenstoffatome umfasst, eine Acylgruppe -COR', in der R' für eine Alkylgruppe steht, die 2 bis 15 Kohlenstoffatome umfasst, oder eine Aroylgruppe -COAr, in der Ar für eine aromatische Gruppe steht, die 6 bis 15 Kohlenstoffatome umfasst, zur Hydroxylierung, Alkoxylierung oder Oxycarbonylierung von Polymeroberflächen oder Polymergemischen, wobei die Polymere aus monomeren Struktureinheiten bestehen, von denen mindestens 50 % aromatische Motive sind, und wobei die Radikale RO● erzeugt werden, indem eine elektrochemische oder photochemische Fenton-Reaktion durchgeführt wird.

2. Verwendung der Fenton-Reaktion für die Hydroxylierung, Alkoxylierung oder Oxycarbonylierung von Polymeroberflächen oder Polymergemischen, wobei die Polymere aus monomeren Struktureinheiten bestehen, von denen mindestens 50 % aromatische Motive sind, wobei die Fenton-Reaktion elektrochemisch oder photochemisch durchgeführt wird.

3. Verfahren zur Hydroxylierung, Alkoxylierung oder Oxycarbonylierung einer Polymeroberfläche oder von Polymergemischen, wobei die Polymere aus monomeren Struktureinheiten bestehen, von denen mindestens 50 % aromatische Struktureinheiten sind, um eine hydroxylierte, alkoxylierte oder oxycarbonylierte Oberfläche zu erhalten, wobei das Verfahren **dadurch gekennzeichnet ist, dass** es darin besteht, die Oberfläche mit Radikalen RO● umzusetzen, wobei R für ein Wasserstoffatom, eine Alkylgruppe, die 2 bis 15 Kohlenstoffatome umfasst, eine Acylgruppe -COR', in der R' für eine Alkylgruppe steht, die 2 bis 15 Kohlenstoffatome umfasst, und insbesondere eine Butyl- oder Laurylgruppe oder eine Aroylgruppe -COAr, in der Ar für eine aromatische Gruppe steht, die 6 bis 15 Kohlenstoffatome umfasst, und insbesondere eine Phenylgruppe steht, und wobei die Radikale RO● erzeugt werden, indem eine elektrochemische oder photochemische Fenton-Reaktion durchgeführt wird.

4. Hydroxylierungsverfahren nach Anspruch 3, **dadurch gekennzeichnet, dass** es darin besteht, die Oberfläche mit den Hydroxylradikalen HO● umzusetzen.

5. Verfahren zur Hydroxylierung einer Polymeroberfläche, wobei die Polymere aus monomeren Struktureinheiten bestehen, von denen mindestens 50 % aromatische Struktureinheiten sind, die insbesondere aus den folgenden aromatischen Gruppen ausgewählt sind:
Phenyl, Anthryl, Naphtyl, Biphenyl, Phenanthryl, Pyrenyl, Pyridyl, Pyrimidyl, Pyrazinyl, Pyridazinyl, Chinoxalyl, Chinazolyl, Chinolinyl, Thiophenyl, Pyrrolyl, Phenathrolinyl, Phenanthridinyl, Indolyl und Carbazolyl, wobei die Polymere insbesondere ausgewählt sind aus: Polycarbonat (PC), Polyphenylensulfid (PPS), Polyphenylenether (PPE), Polyetheretheketon (PEEK), Polyethylenterephthalat (PET), Polyethersulfon (PES), aromatischem Polyamid (PPA), Bisphenol-Polyterephthalat (PAR), Polyetherimid (PEI), Polyamidimid (PAI, Torlon^{®}), Polypyrromellitid (Kapton^{®}, Styrol), Poly(4-methylstyrol), Poly(4-vinylpyridin) (4VP) oder Poly(2-vinylpyridin) (2VP) und Polyvinylcarbazol,
um eine hydroxylierte Oberfläche zu erhalten, wobei das Verfahren **dadurch gekennzeichnet ist, dass** es darin besteht, die Oberfläche mit Hydroxylradikalen HO● umzusetzen, die erhalten wurden, indem die elektrochemische oder photochemische Fenton-Reaktion durchgeführt wurde (ElectroFenton-Reaktion oder PhotoFenton-Reaktion).

6. Verfahren nach Anspruch 5, **dadurch gekennzeichnet, dass** die Hydroxylradikale HO● durch das Mischen von Wasserstoffperoxid und Eisen(III)-Ionen (Fe³⁺) oder Eisen(II)-Ionen (Fe²⁺) erhalten werden.

7. Verfahren nach einem der Ansprüche 3 bis 6, **dadurch gekennzeichnet, dass** die Polymere monomere Struktureinheiten umfassen, die ein Molekülgewicht aufweisen, das zwischen 500 und 5 Millionen Dalton variiert.

8. Verfahren nach einem der Ansprüche 3 bis 7, **dadurch gekennzeichnet, dass** die Polymeroberfläche die Form eines Blatts, eines Gestricks oder einer Röhre, zum Beispiel eines Katheters, von Fäden, Nägeln oder Schrauben, Kugeln, Gegenständen mit diversen Formen haben kann, die als Prothesen oder extra- oder intraökuläre Linsen dienen können.

9. Verfahren nach einem der Ansprüche 5 bis 8, **dadurch gekennzeichnet, dass** der Schritt der darin besteht, die Oberfläche mit den Hydroxylradikalen HO● umzusetzen, etwa 5 Minuten bis etwa 5 Stunden lang ausgeführt wird.

10. Verfahren nach einem der Ansprüche 5 bis 9, **dadurch gekennzeichnet, dass** es einen nachfolgenden Schritt der Funktionalisierung an den Hydroxylgruppen umfasst, die an der hydroxylierten Oberfläche fixiert sind.

## Claims

1. Use of RO• radicals, where R represents a hydrogen atom, an alkyl group having 2 to 15 carbon atoms, an acyl group -COR' in which R' represents an alkyl group having 2 to 15 carbon atoms, or an aroyl group -COAr in which Ar represents an aromatic group having 6 to 15 carbon atoms, for hydroxylation, alkoxylation or oxycarbonylation of polymer or polymer mixture surfaces, said polymers consisting in monomeric units of which at least 50 % among these are aromatic units, and said RO• radicals being generated by carrying out the Fenton reaction, by an electrochemical or photochemical means.

2. Use of the Fenton reaction for hydroxylation, alkoxylation or oxycarbonylation of polymer or mixture polymer surfaces, said polymers consisting of monomeric units of which at least 50 % among these are aromatic units, the Fenton reaction being carried out by electrochemical or photochemical means.

3. Process for hydroxylation, alkoxylation or oxycarbonylation of polymer or mixture polymer surfaces, the said polymers consisting in monomeric units of which at least 50 % among these are aromatic units, to obtain a hydroxylated, alkoxylated or oxycarbonylated surface, the said process being **characterized in that** it consists of reacting the said surface with RO• radicals, R representing a hydrogen, an alkyl group having 2 to 15 carbon atoms, an acyl group -COR' in which R' represents a group of alkyl having 2 to 15 carbon atoms, and in particular a butyl or lauryl group, or an aroyl group -COAr in which Ar represents an aromatic group having 6 to 15 carbon atoms, and in particular a phenyl group and the said RO• radicals being generated by carrying out the Fenton reaction, by an electrochemical or photochemical means.

4. Process for hydroxylation according to claim 3, **characterized in that** it consists of reacting the surface with hydroxyl radicals HO•.

5. Process of hydroxylation of a polymer surface, the said polymers consisting in monomeric units of which at least 50 % among these are aromatic units, in particular chosen from the following aromatic groups: phenyl, anthryl, naphtyl, biphenyl, phenanthryl, pyrenyl, pyridyl, pyrimidyl, pyrazinyl, pyradizinyl, quinoxalyl, quinazolyl, quinolinyl, thiophenyl, pyrrolyl, phenathrolinyl, indolyl and carbazolyl, the said polymers being specifically chosen from: polycarbonate (PC), polyphenylenesulfide (PPS), polyphenylene ether (PPE), polyetherether ketone (PEEK), polyethyleneterephthalate (PET), polyether sulfone (PES), polyaromatic amide (PPA), polybisphenolterephthalate (PAR), polyetherimide (PEI), polyamide-imide (PAI, Torlon^{®}), polypyrromellitide (Kapton^{®}, styrene), poly(4-methylstyrene), poly(4-vinylpyridine) (4VP) or poly(2-vinylpyridine) (2VP) and polyvinylcarbazole, to obtain a hydroxylated surface, the said process being **characterized in that** it consists of reacting the said surface with HO• hydroxyl radicals obtained by carrying out the Fenton reaction, by electrochemical or photochemical means (ElectroFenton or PhotoFenton reaction).

6. Process according to claim 5, **characterized in that** the HO• hydroxyl radical are obtained by mixing hydrogen peroxide and ferric (Fe³⁺) or ferrous (Fe²⁺) ions.

7. Process according to any of claims 3 to 6, **characterized in that** the polymers contain monomeric units presenting a molecular weight from about 500 to about 5 million daltons.

8. Process according to any of claims 3 to 7, **characterized in that** the surface of the polymers is in the form of a sheet, a knitted material, a tube, for example a catheter, strands, nails or screws, balls, objects of different forms being able to serve as prostheses or extra or intraocular lenses.

9. Process according to any of claims 5 to 8, **characterized in that** the step consisting in reacting the surface with HO• hydroxyl radicals is carried out for about 5 minutes to 5 hours.

10. Process according to any of claims 5 to 9, **characterized in that** it involves a subsequent functionalisation step on the hydroxyl groups linked to the hydroxylated surface.
